# EUROPEAN PATENT SPECIFICATION

(11) **EP 1 679 878 B1**
(45) Date of publication and mention of the grant of the patent: **27.09.2017**
(21) Application number: 05257459.7
(22) Date of filing: 03.12.2005
(51) Int. Cl.: H04N 1/00, H04N 1/32

(54) **Method and apparatus for displaying printing progress status**
Verfahren und Einrichtung zur Zustandsanzeige einer Druckoperation
Méthode et dispositif d'affichage du statut d'une opération d'impression

(30) Priority: 05.01.2005 KR 2005000827
(43) Date of publication of application: 12.07.2006
(73) Proprietor: Samsung Electronics Co., Ltd., Suwon-si, Gyeonggi-do, 443-742 (KR)
(72) Inventor: Choi, Myoung-soon, Suwon-si Gyeonggi-do (KR); Jeon, Yu-seong, Suwon-si Gyeonggi-do (KR); Yun, Hee-chul, 109-1804 Hwanggol, Suwon-si Gyeonggi-do (KR)
(74) Representative: Appleyard Lees IP LLP

(56) References cited:
- WO-A-2004/009362
- JP-A- 2 296 454
- JP-A- 2003 298 796
- US-A1- 2002 036 695
- US-A1- 2004 070 672

## Description

Apparatuses and methods consistent with the present invention relates to a method and apparatus for displaying a printing progress status of an image printing apparatus, and more particularly, to displaying a printing progress status of an image printing apparatus for printing plural images.

Recently, a variety of digital still cameras and printing apparatuses have been widely used. The images are picked up with the digital still cameras and are directly printed on a printing paper or are transferred onto various products.

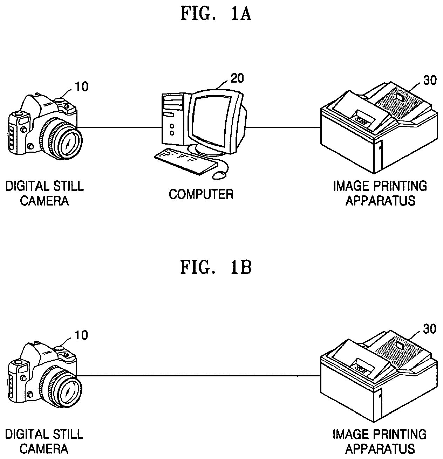

Figure 1 shows a conventional printing system including a digital still camera for taking images and an image printing apparatus for printing the images. The image printing apparatus includes any image output apparatus such as printer for printing image files on a medium such as a paper.

Referring to Figure 1A, the printing system includes a digital still camera 10, an image printing apparatus 30 and a host computer 20 for connecting the digital still camera 10 and the image printing apparatus 30. General-purpose wire or wireless interfaces are provided between the digital still camera 10 and the computer 20 and between the computer 20 and the image printing apparatus 30. General-purpose wire/wireless interfaces include Universal Serial Bus (USB), IEEE 1394, Bluetooth, wireless USB, WiFi, or the like. In order to print images, a user selects the images stored in the digital still camera 10 by using a predetermined software program executed by the computer 20. The computer 20 processes the selected images and transmits the images to the image printing apparatus 30. The image printing apparatus 30 prints the user-selected images.

Figure 1B shows a direct printing scheme where images of the digital still camera 10 are directly transmitted to the image printing apparatus 30 without the computer 20.

In the direct printing scheme, the digital still camera 10 establishes a communication connection to the image printing apparatus 30 and checks whether or not the image printing apparatus 30 supports the direct printing function. Next, if the image printing apparatus 30 can support the direct printing function, the digital still camera 10 transmits an image print request and the user-selected image files to the image printing apparatus 30. The image printing apparatus 30 prints the image files and transmits information on the current printing progress status to the digital still camera 10. In general, the printing progress status information is transmitted in units of an image file.

The method of printing the image stored in the digital still camera 10 is mainly classified into three types.

In the first printing type, a single image selected from the digital still camera 10 is printed on a single printing paper sheet. In the second printing type, plural images selected from the digital still camera 10 are printed on the same number of printing paper sheets. For example, two selected images may be printed on two paper sheets, respectively. Since the user does not need to select the plural images one by one, the second type is more suitable for printing plural images. In the third printing type, plural images selected from the digital still camera 10 are printed on a single paper sheet. The third printing type is called a "thumbnail image printing type" or an "index image printing type". In the third printing type, the plural images are scaled down and printed on the single paper sheet.

According to the first printing type, since only a single image is selected, the user can easily see what the currently-printed image is.

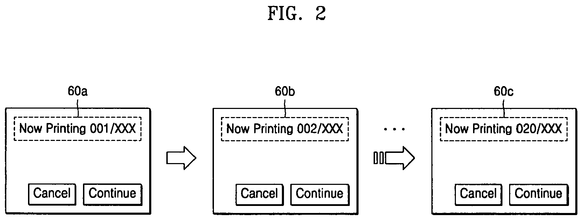

However, according to the second and third printing types, it is difficult for the user to see or memorize what the currently-printed image is. As shown in FIG. 2, a conventional digital still camera does not provide detailed information on the currently printed images being printed by the image printing apparatus. The conventional digital still camera provides information 60a, 60b, and 60c on the printing order, and the currently-printed image among the entire to-be-printed images. Namely, the conventional digital still camera provided only the printing order of the currently-printed image and the number of the entire to-be-printed images. In a case where the user desires to print some of the images and cancel printing the others, the user must directly monitor the printing papers from the image printing apparatus. Otherwise, the user must memorize the printer order of each of the images to determine what the currently-printed image is.

However, it is very difficult for the user to memorize a large number of the printing images and their printing order. Further, the user must directly check the printed material to cancel the printing operation. Therefore, it is inconvenient for the user to directly check the printed material and printing material. In addition, since undesired printing images may be output, expensive printing paper may be wasted.

US-A-2002/0036695 discloses a digital camera and a printer which are connected to each other, and a printing progress situation is displayed on a display unit of the digital camera while an image taken by the digital camera is being printed. This document provides basis for the pre-characterising portion of independent claims 1 and 6 appended hereto.

WO-A-2004/009362 discloses a print system which sends a plurality of image files from a digital camera to a printer. A user interface is provided on the camera which displays progress of printing.

According to the present invention there is provided an apparatus and method as set forth in the appended claims. Preferred features of the invention will be apparent from the dependent claims, and the description which follows.

The present invention provides a method and apparatus for displaying a printing progress status of an image printing apparatus together with an image to a user, so that the user can check the printing progress status.

The present invention also provides a method and apparatus for displaying image information and a printing progress status of an image printing apparatus to a user, so that the user can conveniently monitor and modify printing work.

According to an aspect of the present invention, there is provided an image pick-up apparatus comprising: a display unit displaying the image printed by an image printing apparatus; and a control unit receiving printing progress status information from the image printing apparatus and controlling the display unit to display printing images characterized in that: the display unit displays a next-to be printed image of the image printing apparatus.

In an aspect of the present invention, the image pick-up apparatus may further comprise: a storage unit storing image data; and a communication unit transmitting the image data to the image printing apparatus and receiving the printing progress status information from the image printing apparatus, wherein the control unit reads out image data corresponding to images printed by the image printing apparatus from the storage unit based on the printing progress status information and displays the image data on the display unit.

In addition, the image pick-up apparatus may further comprise a user input unit for selecting and inputting to-be-printed images and a printing type.

In addition, the display unit may display a currently-printed image of the image printing apparatus.

In addition, the display unit may display images selected by a user in a thumbnail format and may highlight a currently-printed image of the image printing apparatus.

An image printing apparatus may be connected to the image pick-up apparatus to print images provided from the image pick-up apparatus, comprising: a communication unit receiving image data from the image pick-up apparatus and transmitting printing progress status information to the image pick-up apparatus; a printing unit printing the received image data; and a control unit checking a printing progress status of the printing unit to generate printing progress status information and transmitting the printing progress status information to the image pick-up apparatus through the communication unit.

In addition, the printing progress status information may include a filename or image data of a currently-printed image and/or a next-to be printed image.

According to still another aspect of the present invention, there is provided a method of displaying a printing progress status of images on an image pickup apparatus, comprising: receiving printing progress status information at an image pickup apparatus from an image printing apparatus; and displaying printing images to a user on the image pickup apparatus by using the printing progress status information; characterized in that: the images displayed to the user includes a next-to be printed image.

The images displayed to the user may further include a currently-printed image.

The method of displaying a printing progress status of images, wherein prior to receiving printing progress status information, the method comprises at the image printing apparatus: checking the printing progress status and generating printing progress status information on printing image; and transmitting the printing progress status information to an image pick-up apparatus.

The above and other aspects of the present invention will become more apparent by describing in detail exemplary embodiments thereof with reference to the attached drawings in which:
Figure 1A and 1B show a conventional printing system including a digital still camera for taking images and an image printing apparatus for printing the images;
Figure 2 shows a conventional printing progress status displaying method;
Figure 3 is a block diagram of a printing system according to an exemplary embodiment of the present invention;
Figure 4 is a schematic view for explaining communication of printing progress status information between an image providing apparatus and an image printing apparatus according to an exemplary embodiment of the present invention;
Figure 5 shows an example of displaying printing progress status of plural images printed in the printing system according to the present invention;
Figures 6 to 8 shows examples of printing progress status information screens according to the present invention; and
Figure 9 is a flowchart of a printing progress status displaying method according to an exemplary embodiment of the present invention.

In the description, an image pick-up apparatus includes a digital still camera (DSC), a digital video camcorder (DVC), a portable media player (PMP), a camera phone, and any kinds of apparatus for picking up an image. In addition, an image printing apparatus includes a printer and any kinds of apparatus for printing an image.

For simplicity, well-known functions and constructions of the image pick-up apparatus and the image printing apparatus will not be described.

Now, an exemplary embodiment of a printing system according to the present invention will be described with reference to the accompanying drawings.

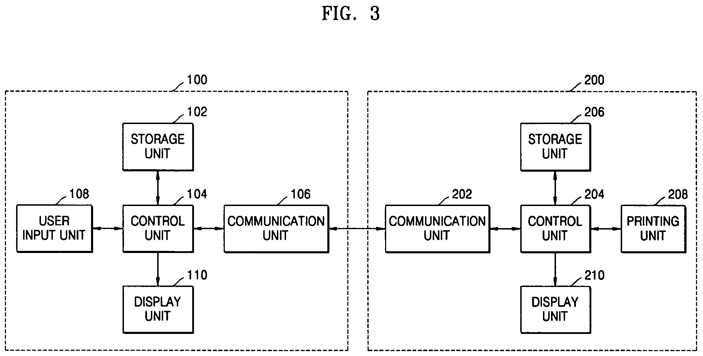

Figure 3 is a block diagram of a printing system according to an exemplary embodiment of the present invention. The printing system includes an image pick-up apparatus 100 and an image printing apparatus 200 connected to each other by a general-purpose wire/wireless interface. The general-purpose wire/wireless interface may include USB, IEEE 1394, Bluetooth, wireless USB, WiFi, or the like.

In the present invention, a user selects images stored in the image pick-up apparatus 100. While the selected images are printed by the image printing apparatus 200, the printed images are displayed on a display unit of the image pick-up apparatus 100 according to a printing progress status of the image printing apparatus 200.

The image pick-up apparatus 100 includes a storage unit 102, a control unit 104, a communication unit 106, a user input unit 108, and a display unit 110.

The storage unit 102 stores image picked up by the image pick-up apparatus 100. The storage unit 102 may be a detachable memory card or a memory device built in the image pick-up apparatus 100.

The user utilizes the user input unit 108 to select to-be-printed images and a printing type. In addition, in order to select the to-be-printed images and the printing type, the user may utilize the display unit 110 to check the images stored in the storage unit 102.

The control unit 104 reads out the selected images and outputs the selected images to the communication unit 106.

The communication unit 106 establishes connection to the image printing apparatus 200 to transmit the selected images to the image printing apparatus 200. In addition, the communication unit 106 receives printing progress status information from the image printing apparatus 200 and outputs the printing progress status information to the control unit 104. Here, the printing progress status information denotes information on a currently-printed image and/or a next-to be printed image. More specifically, the printing progress status information may include a filename of the currently-printed image and/or a next-to be printed image data. In addition, the printing progress status information may include a sequence number of the currently-printed image among the entire printed and to-be-printed images.

The control unit 104 checks the printed, printing, and to-be-printed images of the image printing apparatus 200 based on the printing progress status information printing progress status information. Next, the control unit 104 retrieves the images stored in the storage unit 102 and controls the display unit 110 to display the currently-printed image and/or the next-to be printed images.

Under the control of the control unit 104, the display unit 110 displays the currently-printed image and/or the next-to be printed images to the user. Therefore, the user can see the currently-printed image and/or the next-to be printed images. Here, the display unit 110 may be constructed with an LCD panel or the like. The images may be displayed in a thumbnail format. The printing progress status information may include previous-printed images and/or the next-to be printed images in addition to the currently-printed image. In addition, the display unit 110 may display plural selected images and highlight the currently-printed image.

The image printing apparatus 200 includes a communication unit 202, a control unit 204, a storage unit 206, a printing unit 208, and a display unit 210.

The communication unit 202 communicates with the communication unit 106 of the image pick-up apparatus 100 by using a predetermined communication protocol. The communication unit 202 receives image data from the image pick-up apparatus 100 and transmits the printing progress status information of the image printing apparatus 200 to the image pick-up apparatus 100.

The control unit 204 processes the image data output from the communication unit 202 according to the user-selected printing type and outputs the processed image data to the printing unit 208. The printing unit 208 prints the image data.

The storage unit 206 may include a buffer for temporarily storing the image data provided by the image pick-up apparatus 100 and a memory for storing an operating program for the image printing apparatus 200.

The control unit 204 controls the communication unit 202 to transmit the printing progress status information (for example, information on the currently-printed image and/or the next-printed images) of the image printing apparatus 200 to the image pick-up apparatus 100.

Similar to the image pick-up apparatus 100, the display unit 210 of the image printing apparatus 200 displays the printing progress status information as an image. In the image printing apparatus 200, the printing progress status (that is, the currently-printed image) can be directly seen. However, since the next-to be printed image cannot be directly seen, the display unit 200 can be preferably used to show the next-to be printed image to the user.

Now, operations of the printing system according to an exemplary embodiment of the present invention will be described.

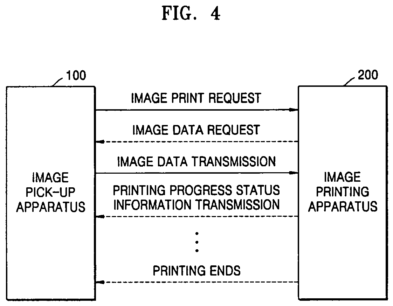

Figure 4 is a schematic view for explaining communication of printing progress status information between an image pick-up apparatus and an image printing apparatus according to the present invention.

First, a user selects an image by using the user input unit 108 of the image pick-up apparatus 100. The communication unit 106 of the image pick-up apparatus 100 establishes a connection with the communication unit 202 of the image printing apparatus 200 by using a predetermined communication protocol to transmit an image print request.

In response to the image print request, the control unit 204 of the image printing apparatus 200 checks whether or not the image printing apparatus 200 is ready to print. If the image printing apparatus 200 is ready to print, the control unit 204 transmits an image data file request to the image pick-up apparatus 100.

The image pick-up apparatus 100 transmits the image data file to the image printing apparatus 200. When receiving the image data file, the image printing apparatus 200 starts printing the image data file. At this time, the control unit 204 checks the printing progress status of the image printing apparatus 200 and transmits the printing progress status information on the currently-printed image and/or the next-to be printed images to the image pick-up apparatus 100 every time that an image is printed.

The control unit 104 of the image pick-up apparatus 100 controls the display unit 110 to display the currently-printed image and/or the next-to be printed images based on the transmitted printing progress status information. More specifically, the control unit 104 reads out the currently-printed image and/or the next-to be printed images stored in the storage unit 102 by using the printing progress status information such as an image filename and scales down the currently-printed image and/or the next-to be printed images displayed on the display unit 110.

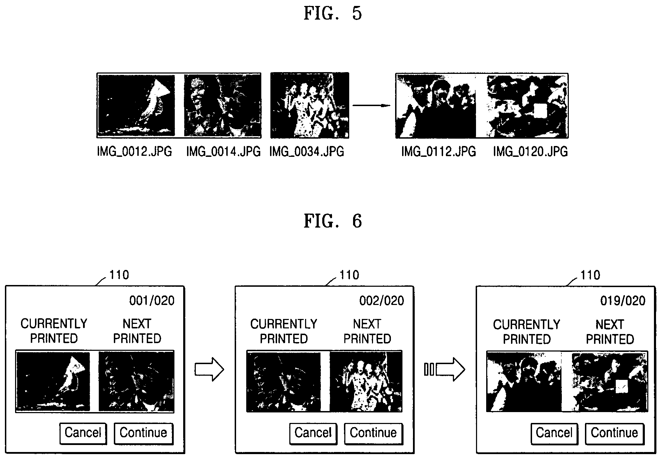

Figure 5 shows an example of displaying printing progress status of plural images printed in the printing system according to the present invention.

When the user selects plural images by using the user input unit 108, the control unit 108 transmits an image print request to the image printing apparatus 200 through the communication unit 106.

When the image printing apparatus 200 is ready to print, the control unit 204 transmits an image data file request to the image pick-up apparatus 100.

The control unit 104 of the image pick-up apparatus 100 sequentially reads out the image file data from the storage unit 102 and transmits the image file data to the image printing apparatus 200. In the example of Figure 5, the image file data is transmitted in an order of IMG_0012.JPG, IMG_0014.JPG, and IMG_0034.JPG.

When receiving the image data files, the image printing apparatus 200 starts printing the image data files. At this time, the control unit 204 checks the printing progress status of the image printing apparatus 200 and transmits the printing progress status information on the currently-printed image and/or the next-to be printed images to the image pick-up apparatus 100.

As shown in Figure 6, the control unit 104 of the image pick-up apparatus 100 controls the display unit 110 to display the currently-printed image and/or the next-to be printed images based on the transmitted printing progress status information.

A convention printing progress status displaying apparatus displays only the printing order of the currently-printed image among the entire to-be-printed images. However, according to the present invention, the user can directly see the currently-printed image and/or the next-to be printed images displayed on the display unit 110, so that it is possible for the user to perform printing work conveniently.

For example, there is a case where the user desires to print up to the image IMG_0014.JPG and stop printing the next images. Conventionally, the user must memorize the printing order of the images which the user desires to stop printing. However, according to the present invention, since the user can see directly the to-be-printed images, it is possible to stop printing the image while checking the printing progress status.

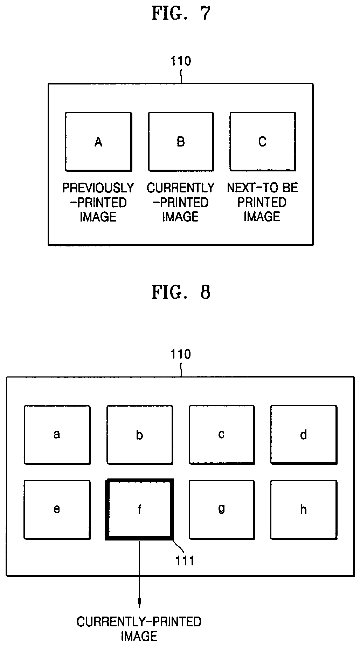

Instead of the screen shown in Figure 6, a variety of the printing progress status displaying screens may be implemented. For example, as shown in Figure 7, a previously-printed image A, a currently-printed image B, and a next-to be printed image C can be displayed on one screen of the display unit. Alternatively, as shown in Figure 8, plural images selected by users may be displayed in a thumbnail format, and the currently-printed images may be highlighted. Therefore, as the printing operation of the image printing apparatus 200 proceeds, the highlight box 111 moves to indicate the currently-printed image.

According to the present invention, in addition to the displayed images, a variety of information such as a printing order of the currently-printing images may be displayed on the printing progress status information screen.

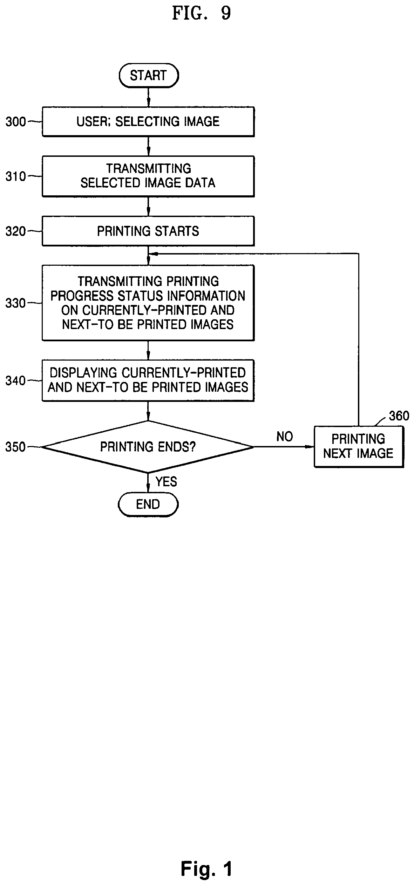

Figure 9 is a flowchart of a printing progress status displaying method according to the present invention.

Firstly, a user selects an image stored in the storage unit 110 by using the user input unit 108 of the image pick-up apparatus 100 (operation 300). The image pick-up apparatus 100 transmits an image print request o the image printing apparatus 200. In response to the image print request, the control unit 202 of the image printing apparatus 200 checks whether or not the image printing apparatus 200 is ready to print. If the image printing apparatus 200 is ready to print, the control unit 202 transmits an image data file request to the image pick-up apparatus 100.

Next, the image pick-up apparatus 100 transmits the selected image file to the image printing apparatus 200 (operation 310). The image printing apparatus 200 starts printing the image file according to a printing type selected by the user (operation 320)

The control unit 204 of the image printing apparatus 200 checks the printing progress status of the image printing apparatus 200 and transmits the printing progress status information on the currently-printed image and/or the next-printed images to the image pick-up apparatus 100 (operation 330).

The control unit 104 checks and reads out the currently-printed image and/or the next-to be printed images from the storage unit 102 using the printing progress status information and transforms the images in a predetermined format. The control unit 104 outputs the transformed image to the display unit 110. The display unit 110 displays the transformed currently-printed image and/or the next-to be printed images (operation 340).

Next, it is determined whether or not all the images selected by the user are printed (operation 350). When all the images are printed, the printing operation ends. When all the images are not printed, or when the user-interrupted printing operation restarts, the aforementioned operations repeat to print the next-to be printed image (operation 360).

According to a printing progress status displaying method and apparatus of the present invention, since a user can see a currently-printed image and/or next-to be printed images by using a display unit of an image pick-up apparatus such as a digital camera, it is possible for the user to check the printing progress status without seeing an output of an image printing apparatus such as a printer.

In addition, according to a printing progress status displaying method and apparatus of the present invention, since a user can see next-to be printed images, it is possible for the user to print up to desired images and conveniently stop printing the next to be printed images.

In addition, according to a printing progress status displaying method and apparatus of the present invention, since a user can stop printing undesired images, it is possible to prevent waste of printing paper.

The printing progress status displaying method according to the present invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over a network coupled computer system so that the computer readable code is stored and executed in a distributed fashion.

Although a few preferred embodiments have been shown and described, it will be appreciated by those skilled in the art that various changes and modifications might be made without departing from the scope of the invention, as defined in the appended claims.

## Claims

1. An image pick-up apparatus (100) comprising:
a display unit (110) configured to display a printing progress status of images printed by an image printing apparatus (200); and
a control unit (104) configured to receive printing progress status information from the image printing apparatus (200) and to control the display unit (110) to display printing images by using the printing progress status information;
**characterized in that**:
the control unit is further configured to control the display unit to display printing images including a next-to be printed image of the image printing apparatus (200) by using the printing progress status information.

2. The image pick-up apparatus (100) according to claim 1, further comprising:
a storage unit (102) which stores image data; and
a communication unit (106) which transmits the image data to the image printing apparatus (200) and receives the printing progress status information from the image printing apparatus (200),
wherein the control unit (104) reads out image data corresponding to images printed by the image printing apparatus (200) from the storage unit (102) based on the printing progress status information and displays the image data on the display unit (110).

3. The image pick-up apparatus (100) according to claim 1, further comprising a user input unit (108) which provides selecting and inputting to-be-printed images and a printing type.

4. The image pick-up apparatus (100) according to any preceding claim, wherein the display unit (110) also displays a currently-printed image of the image printing apparatus (200).

5. The image pick-up apparatus (100) according to any preceding claim, wherein the display unit (110) displays images selected by a user in a thumbnail format and highlights a currently-printed image of the image printing apparatus (200).

6. A system comprising an image pick-up apparatus of any preceding claim and an image printing apparatus (200) connected to the image pick-up apparatus (100) to print images provided from the image pick-up apparatus (100), said image printing apparatus comprising:
a communication unit (202) which receives image data from the image pick-up apparatus (100) and transmits printing progress status information to the image pick-up apparatus (100);
a printing unit (208) which prints the received image data; and
a control unit (204) which checks a printing progress status of the printing unit (208) to generate printing progress status information and transmits the printing progress status information to the image pick-up apparatus (100) through the communication unit (202).

7. The system according to claim 6, wherein the printing progress status information includes a filename of image data on at least one of a currently-printed image and/or a next-to be printed image.

8. A method of displaying a printing progress status of images on an image pickup apparatus (100), comprising:
receiving printing progress status information at the image pickup apparatus (100) from an image printing apparatus (200); and
displaying printing images to a user on the image pickup apparatus (100) by using the printing progress status information;
**characterized in that**:
the images displayed to the user include a next-to be printed image.

9. The method of claim 8, wherein the images displayed to the user further include a currently-printed image.

10. The method according to claim 9,
wherein the images selected by the user are displayed to the user in a thumbnail format, and
wherein the currently-printed image is highlighted.

11. The method according to claim 8, 9 or 10, wherein the printing progress status information includes a filename of image data.

12. The method of any of claims 8 to 11, wherein prior to receiving printing progress status information, the method comprises at the image printing apparatus (200);
checking the printing progress status and generating printing progress status information on a printing image; and
transmitting the printing progress status information to the image pick-up apparatus (100).

## Patentansprüche

1. Bildaufnahmeeinrichtung (100), umfassend:
eine Anzeigeeinheit (110), die dazu ausgelegt ist, einen Druckoperationszustand von Bildern, die von einer Bilddruckeinrichtung (200) gedruckt werden, anzuzeigen; und
eine Steuereinheit (104), die dazu ausgelegt ist, Druckoperationszustandsinformationen von der Bilddruckeinrichtung (200) zu empfangen und die Anzeigeeinheit (110) zu steuern, unter Verwendung der Druckoperationszustandsinformationen Druckbilder anzuzeigen;
**dadurch gekennzeichnet, dass**:
die Steuereinheit ferner dazu ausgelegt ist, die Anzeigeeinheit zu steuern, Druckbilder einschließlich des nächsten zu druckenden Bildes der Bilddruckeinrichtung (200) unter Verwendung der Druckoperationszustandsinformationen anzuzeigen.

2. Bildaufnahmeeinrichtung (100) nach Anspruch 1, ferner umfassend:
eine Speichereinheit (102), die Bilddaten speichert; und
eine Kommunikationseinheit (106), die die Bilddaten an die Bilddruckeinrichtung (200) sendet und die Druckoperationszustandsinformationen von der Bilddruckeinrichtung (200) empfängt,
wobei die Steuereinheit (104) Bilddaten, die Bildern entsprechen, die von der Bilddruckvorrichtung (200) gedruckt werden, basierend auf den Druckoperationszustandsinformationen aus der Speichereinheit (102) ausliest und die Bilddaten auf der Anzeigeeinheit (110) anzeigt.

3. Bildaufnahmeeinrichtung (100) nach Anspruch 1, ferner umfassend eine Benutzereingabeeinheit (108), die das Auswählen und Eingeben von zu druckenden Bildern und eines Drucktyps bereitstellt.

4. Bildaufnahmeeinrichtung (100) nach einem der vorhergehenden Ansprüche, wobei die Anzeigeeinheit (110) auch ein Bild, das momentan von der Bilddruckeinrichtung (200) gedruckt wird, anzeigt.

5. Bildaufnahmeeinrichtung (100) nach einem der vorhergehenden Ansprüche, wobei die Anzeigeeinheit (110) von einem Benutzer in einem Miniaturbildformat ausgewählte Bilder anzeigt und ein Bild, das momentan von der Bilddruckeinrichtung (200) gedruckt wird, hervorhebt.

6. System, umfassend eine Bildaufnahmeeinrichtung nach einem der vorhergehenden Ansprüche und eine Bilddruckeinrichtung (200), die mit der Bildaufnahmeeinrichtung (100) verbunden ist, um Bilder, die von der Bildaufnahmeeinrichtung (100) bereitgestellt werden, zu drucken, wobei die Bilddruckeinrichtung umfasst:
eine Kommunikationseinheit (202), die Bilddaten von der Bildaufnahmeeinrichtung (100) empfängt und Druckoperationszustandsinformationen an die Bildaufnahmeeinrichtung (100) sendet;
eine Druckeinheit (208), die die empfangenen Bilddaten druckt; und
eine Steuereinheit (204), die einen Druckoperationszustand der Druckeinheit (208) prüft, um Druckoperationszustandsinformationen zu erzeugen, und die Druckoperationszustandsinformationen über die Kommunikationseinheit (202) an die Bildaufnahmeeinrichtung (100) sendet.

7. System nach Anspruch 6, wobei die Druckoperationszustandsinformationen einen Dateinamen von Bilddaten mindestens eines Bildes, das momentan gedruckt wird, und/oder eines als nächstes zu druckenden Bildes aufweist.

8. Verfahren zum Anzeigen eines Druckoperationszustands von Bildern auf einer Bildaufnahmeeinrichtung (100), umfassend:
Empfangen, an der Bildaufnahmeeinrichtung (100), von Druckoperationszustandsinformationen von einer Bilddruckeinrichtung (200); und
Anzeigen von Druckbildern einem Benutzer auf der Bildaufnahmeeinrichtung (100) unter Verwendung der Druckoperationszustandsinformationen;
**dadurch gekennzeichnet, dass**:
die dem Benutzer angezeigten Bilder ein als nächstes zu druckendes Bild aufweisen.

9. Verfahren nach Anspruch 8, wobei die dem Benutzer angezeigten Bilder ferner ein Bild, das momentan gedruckt wird, aufweisen.

10. Verfahren nach Anspruch 9,
wobei die vom Benutzer ausgewählten Bilder dem Benutzer in einem Miniaturbildformat angezeigt werden, und
wobei das Bild, das momentan gedruckt wird, hervorgehoben wird.

11. Verfahren nach Anspruch 8, 9 oder 10, wobei die Druckoperationszustandsinformationen einen Dateinamen von Bilddaten aufweisen.

12. Verfahren nach einem der Ansprüche 8 bis 11, wobei, vor dem Empfangen von Druckoperationszustandsinformationen, das Verfahren bei der Bilddruckeinrichtung (200) umfasst:
Prüfen des Druckoperationszustands und Erzeugen von Druckoperationszustandsinformationen über ein Druckbild; und
Senden der Druckoperationszustandsinformationen an die Bildaufnahmeeinrichtung (100).

## Revendications

1. Appareil de prise d'images (100) comprenant :
une unité d'affichage (110), conçue pour afficher un statut de progression d'impression d'images imprimées par un appareil d'impression d'images (200) ; et
une unité de contrôle (104), conçue pour recevoir des informations de statut de progression d'impression en provenance de l'appareil d'impression d'images (200) et pour contrôler l'unité d'affichage (110) pour que ladite unité d'affichage affiche des images d'impression au moyen des informations de statut de progression d'impression ;
le dispositif étant **caractérisé en ce que** :
l'unité de contrôle est en outre conçue pour contrôler l'unité d'affichage pour que l'unité d'affichage affiche des images d'impression, incluant une image suivante à imprimer de l'appareil d'impression d'images (200), au moyen des informations de statut de progression d'impression.

2. Appareil de prise d'images (100) selon la revendication 1, comprenant en outre :
une unité de stockage (102) qui stocke des données d'image ; et
une unité de communication (106) qui transmet les données d'image à l'appareil d'impression d'images (200) et reçoit les informations de statut de progression d'impression en provenance de l'appareil d'impression d'images (200),
l'unité de contrôle (104) lisant, à partir de l'unité de stockage (102), les données d'image correspondant aux images imprimées par l'appareil d'impression d'image (200) sur la base des informations de statut de progression d'impression, et affichant les données d'image sur l'unité d'affichage (110).

3. Appareil de prise d'images (100) selon la revendication 1, comprenant en outre une unité d'entrée d'utilisateur (108) qui permet de sélectionner et d'entrer des images à imprimer et un type d'impression.

4. Appareil de prise d'images (100) selon l'une quelconque des revendications précédentes, dans lequel l'unité d'affichage (110) affiche également une image en cours d'impression de l'appareil d'impression d'images (200).

5. Appareil de prise d'images (100) selon l'une quelconque des revendications précédentes, dans lequel l'unité d'affichage (110) affiche des images sélectionnées par un utilisateur dans un format miniature, et met en surbrillance une image en cours d'impression de l'appareil d'impression d'images (200).

6. Système comprenant un appareil de prise d'images selon l'une quelconque des revendications précédentes et un appareil d'impression d'images (200) connecté à l'appareil de prise d'images (100) et destiné à imprimer des images fournies par l'appareil de prise d'images (100), ledit appareil d'impression d'images comprenant :
une unité de communication (202) qui reçoit des données d'image en provenance de l'appareil de prise d'images (100) et transmet les informations de statut de progression d'impression à l'appareil de prise d'images (100) ;
une unité d'impression (208) qui imprime les données d'image reçues ; et
une unité de contrôle (204) qui vérifie un statut de progression d'impression de l'unité d'impression (208) afin de générer des informations de statut de progression d'impression, et qui transmet les informations de statut de progression d'impression à l'appareil de prise d'images (100) par l'intermédiaire de l'unité de communication (202).

7. Système selon la revendication 6, dans lequel les informations de statut de progression d'impression incluent un nom de fichier des données d'image sur une image en cours d'impression et/ou une image suivante à imprimer.

8. Procédé d'affichage d'un statut de progression d'impression d'images sur un appareil de prise d'images (100), le procédé consistant à :
recevoir des informations de statut de progression d'impression au niveau de l'appareil de prise d'images (100) en provenance d'un appareil d'impression d'images (200) ; et
afficher des images d'impression à un utilisateur sur l'appareil de prise d'images (100) au moyen des informations de statut de progression d'impression ;
le dispositif étant **caractérisé en ce que** :
les images affichées à l'utilisateur incluent une image suivante à imprimer.

9. Procédé selon la revendication 8, dans lequel les images affichées à l'utilisateur incluent en outre une image en cours d'impression.

10. Procédé selon la revendication 9,
dans lequel les images sélectionnées par l'utilisateur sont affichées à l'utilisateur dans un format miniature, et
dans lequel l'image en cours d'impression est mise en surbrillance.

11. Procédé selon la revendication 8, 9 ou 10, dans lequel les informations de statut de progression d'impression incluent un nom de fichier de données d'image.

12. Procédé selon l'une quelconque des revendications 8 à 11, le procédé consistant en outre, avant la réception des informations de statut de progression d'impression et au niveau de l'appareil d'impression d'images (200), à :
vérifier le statut de progression d'impression et générer des informations de statut de progression d'impression sur une image d'impression ; et
transmettre les informations de statut de progression d'impression à l'appareil de prise d'images (100).
